# EUROPÄISCHE PATENTSCHRIFT

(11) **EP 2 374 695 B1**
(45) Veröffentlichungstag und Bekanntmachung des Hinweises auf die Patenterteilung: **16.01.2013**
(21) Anmeldenummer: 11002488.2
(22) Anmeldetag: 25.03.2011
(51) Int. Cl.: B62D 15/02, G01C 21/36, G08G 1/0962, G08G 1/16

(54) **Verfahren und Betrieb eines Spurhalteassistenzsystems für mehrspuriges Abbiegen in einem Kraftfahrzeug und Kraftfahrzeug**
Method and operation of a tracking assistance system for multi-lane turning in a motor vehicle and motor vehicle
Procédé et mode de fonctionnement d'un système d'assistance au maintien sur voie lors du passage d'une intersection à plusieurs voies dans un véhicule automobile et pour véhicule automobile

(30) Priorität: 10.04.2010 DE 102010014499
(43) Veröffentlichungstag der Anmeldung: 12.10.2011
(73) Patentinhaber: Audi AG, 85045 Ingolstadt (DE)
(72) Erfinder: Weidlich, Thomas, 85092 Kösching (DE)
(74) Vertreter: Thielmann, Frank

(56) Entgegenhaltungen:
- WO-A2-2005/121707
- DE-A1-102007 011 276
- DE-A1-102008 028 374
- JP-A- 9 325 042
- JP-A- 2005 165 555
- JP-A- 2006 098 348
- JP-A- 2009 250 714
- KR-B1- 100 815 153

## Beschreibung

Die Erfindung betrifft ein Verfahren zum Betrieb eines Spurhalteassistenzsystems für mehrspuriges Abbiegen in einem Kraftfahrzeug sowie ein Kraftfahrzeug.

In heutigen Kraftfahrzeugen sind Spurhalteassistenzsysteme, beispielsweise als sogenannte Lane Departure Warning (LDW)-Systeme, für den Einsatz auf mehrspurigen Straßen, insbesondere Autobahnen, bei hohen Geschwindigkeiten konzipiert. Die meisten dieser Spurhalteassistenzsysteme basierenden darauf, mit einem bildgebenden Umgebungssensor, insbesondere einer Kamera, einen Bereich vor dem Kraftfahrzeug aufzunehmen und die aufgenommenen Bilder dann durch eine Bildverarbeitung auf darin sichtbare Fahrspurbegrenzungen zu untersuchen. Die Fahrspurbegrenzungen definieren dann die Begrenzungen der aktuell befahrenen Fahrspur und können beispielsweise verwendet werden, um bei einer zu großen Annäherung an die Fahrspurbegrenzung ein Warnsignal oder dergleichen auszugeben. Auch Spurwechselassistenzsysteme sind heutzutage wohl bekannt, bei denen es insbesondere um die Kollisionsvermeidung geht, indem überprüft wird, ob auf der benachbarten Fahrspur bereits ein Kraftfahrzeug vorhanden ist.

DE102007011276 A1 ist als nächstliegender Stand der Technik zu sehen und betrifft ein Verfahren zur automatischen Fahrwegbestimmung, wobei wenn über einen Fahrtrichtungsanzeiger ein bevorstehender Abbiegevorgang des Kraftfahrzeugs erfasst wird, eine kreisbogenartige Übergangsfahrspur, derart bestimmt wird, dass die Fahrspur über die Übergangsfahrspur in die geplante Fahrspur überführt wird.

Eine spurbezogene Problematik kann jedoch auch in speziellen Fällen innerorts auftreten. Als besonders unfallträchtig haben sich häufig Kreuzungen erwiesen, bei denen ein mehrspuriges Abbiegen erfolgt, wie dies in großen Städten oder auch auf großen Zubringerstraßen oder dergleichen häufig realisiert ist. Dabei ist nicht nur eine Rechtsabbiegerspur bzw. Linksabbiegerspur vorgesehen, sondern es liegen zwei oder mehr Abbiegespuren für wenigstens eine Richtung vor, die entsprechend in Fahrspuren auf der Straße, auf die hin abgebogen werden soll, münden. Problematisch bei solchen Kreuzungen ist meist, dass im Kreuzungsbereich keine Fahrspurmarkierungen vorhanden sind, das bedeutet, dem Fahrer wird nicht mitgeteilt, wie genau er die Kurve durchfahren soll, um sich dann in die korrekte Fortsetzung seiner Fahrspur einzureihen. So kann es beispielsweise bei drei Abbiegespuren vorkommen, dass der Abbiegevorgang auf der ganz rechten Fahrspur gestartet wird, sich der Fahrer dann aber auf der ganz linken Spur einordnet. Gerade bei Kreuzungen, die eher unübersichtlich sind, treten derartige Probleme auf und bergen meist ein nennenswertes Kollisionsrisiko, wenn es beim Abbiegevorgang zu einem unbeabsichtigten Spurwechsel kommt.

Der vorliegenden Erfindung liegt daher die Aufgabe zugrunde, ein Verfahren anzugeben, dass die Sicherheit beim Abbiegen mit mehreren Abbiegespuren erhöht.

Zur Lösung dieser Aufgabe ist erfindungsgemäß ein Verfahren zum Betrieb eines Spurhalteassistenzsystems für mehrspuriges Abbiegen in einem Kraftfahrzeug vorgesehen, umfassend folgende Schritte:
- Ermittlung von die mehreren Abbiegespuren beschreibenden Umgebungsdaten,
- unter Berücksichtigung der Umgebungsdaten Ermittlung eines die befahrene Fahrspur im Abbiegebereich beschreibenden virtuellen Fahrspurverlaufs,
- Verwendung des virtuellen Fahrspurverlaufs zur Information und/oder Assistenz eines Fahrers des Kraftfahrzeugs.

Zunächst wird im erfindungsgemäßen Verfahren, ggf. auch nur bei Stadtfahrten, ständig überprüft, ob eine Situation gegeben ist, in der ein mehrspuriges Abbiegen bevorsteht. Hierfür können einzelne Informationsquellen, beispielsweise ein Navigationssystem, dessen Navigationsdaten häufig auch Daten über die Zahl der Spuren einer Straße umfassen, verwendet werden, es ist jedoch auch an dieser Stelle bereits eine Informationsfusion denkbar, beispielsweise mit Kameradaten. Ist eine Fahrsituation gegeben, in der ein mehrspuriges Abbiegen bevorsteht, so wird sozusagen die durch das erfindungsgemäße Verfahren beschriebene Assistenzfunktion des Fahrerassistenzsystems aktiviert.

Häufig sind, wie eingangs bereits erläutert, auf den entsprechenden Kreuzungsflächen oder in den Abbiegebereichen keine oder keine automatisch erkennbaren und zuordenbaren Fahrspurmarkierungen vorhanden, die dem Fahrer beschreiben, wie er nach dem Abbiegevorgang wieder auf die korrekte, seiner ursprünglichen Fahrspur zugeordnete Fahrspur gelangt. Es werden daher nun Umfelddaten ermittelt, aus denen zum einen hervorgeht, welches die aktuelle Fahrspur ist, die das Kraftfahrzeug befährt, und die zum anderen dazu geeignet sind, einen virtuellen Fahrspurverlauf zu erkennen, der sozusagen die aktuell befahrene Fahrspur mit der entsprechenden Fahrspur verbindet, die die Fortsetzung der aktuellen Fahrspur nach dem Abbiegen darstellt. Beispielsweise können als Umgebungsdaten Messdaten wenigstens eines Umgebungssensors und/oder einer Kamera, insbesondere einer Kamera eines auf eine Fahrspur bezogenen weiteren Fahrerassistenzsystems, und/oder Daten eines Navigationssystems berücksichtigt werden.

Dabei kann beispielsweise vorgesehen sein, dass in von einer Kamera aufgenommenen Umgebungsbildern und/oder bei einer entsprechenden Ausbildung eines Navigationssystems Navigationsdaten als Umgebungsdaten die Fahrspurbegrenzungen auf einem geraden Teil der befahrenen Fahrspur, beispielsweise über übliche Methoden der Bildverarbeitung, detektiert und im Abbiegebereich extrapoliert oder auf andere Weise abgeschätzt werden. Dabei können verschiedenste Vorgehensweisen angewandt werden, beispielsweise eine durch Parameter der zu fahrenden Kurve parametrierbare Standardkurvenform angesetzt und/oder angepasst werden. Denkbar ist es auch, von einer Standardverbindung zwischen den "geraden Fahrspurenden" auszugehen und diese dann gegebenenfalls aufgrund weiterer Daten zu optimieren. Verschiedenste Ausgestaltungen sind hier denkbar, wobei die besten Ergebnisse im Rahmen einer Informationsfusion von mehreren Informationsquellen, beispielsweise eines Navigationssystems und einer insbesondere ohnehin vorhandenen, einem anderen auf Fahrspuren bezogenen Fahrerassistenzsystem zugeordnete Kamera, erhalten werden.

Die letztlich ermittelte virtuelle Fahrspur wird also beispielsweise beschrieben durch zwei virtuelle Fahrspurbegrenzungen und bildet eine Art erlaubten "Fahrschlauch", den das Kraftfahrzeug nicht verlassen sollte.

Die Sicherheit in dem Kraftfahrzeug kann durch das erfindungsgemäße Verfahren dann erhöht werden, wenn dem Fahrer eine für ihn nutzbare Information über den virtuellen Fahrspurverlauf gegeben wird und/oder ihm anderweitig assistiert wird, beispielsweise durch eine Warnung beim Verlassen des erlaubten Fahrschlauchs oder gar einen Fahreingriff, wobei auf die verschiedenen Möglichkeiten im Folgenden noch näher eingegangen werden wird. Auf diese Weise werden Kollisionen, die durch den Verlust der eigentlich zu befahrenen Fahrspur auftreten können, vermieden, und dem Fahrer wird auf nützliche Weise in einer kritischen Verkehrssituation assistiert.

Der virtuelle Fahrspurverlauf kann auch mit Erfassen weiterer Daten ständig aktualisiert werden, so dass über einen Zeitraum gesammelte Daten für die Ermittlung des virtuellen Fahrspurverlaufs einfließen, der mithin ständig aktuell gehalten wird. Selbstverständlich sind im Rahmen des erfindungsgemäßen Verfahrens auch Plausibilitätsprüfungen denkbar, beispielsweise eine Überprüfung der Breite der ermittelten virtuellen Fahrspur oder dergleichen.

Es sei an dieser Stelle noch angemerkt, dass das erfindungsgemäße Verfahren als eine Art "Zusatzfunktion" eines bestehenden Fahrerassistenzsystems, beispielsweise eines für Autobahnen oder andere mehrspurige Straßen vorgesehen Spurhalteassistenzsystems oder Spurwechselassistenzsystems (z.B. Lane Departure Warning), realisiert werden kann. Solche Systeme sind im Stadtverkehr oder dergleichen meist deaktiviert; das erfindungsgemäße Verfahren stellt jedoch eine Zusatzfunktion zur Verfügung, die als eigenes "Modul" innerhalb von Städten oder ähnlichen Bereichen genutzt werden kann, um die Sicherheit weiter zu erhöhen. Eine Erweiterung von ohnehin vorhandenen Fahrerassistenzsystemen hat den Vorteil, dass auch im erfindungsgemäßen Verfahren vorteilhaft nutzbare Komponenten wie Sensoren, insbesondere eine Kamera, Bildverarbeitungsalgorithmen oder dergleichen mehrfach genutzt werden können und nicht erneut vorgesehen werden müssen. Eine Kollision der Funktionen tritt, wie beschrieben, dabei nicht auf, da sie ja für gänzlich unterschiedliche Fahrsituationen konzipiert sind.

Selbstverständlich ist es jedoch auch möglich, ein eigenes Fahrerassistenzsystem mit eigenem Steuergerät zu entwerfen, welches aber dann ggf. auch mehrfach genutzte Sensoren/Kameras und dergleichen mitnutzen kann.

Zur Information des Fahrers kann beispielsweise vorgesehen sein, dass der virtuelle Fahrspurverlauf auf einer Anzeigevorrichtung dargestellt wird. Dem Fahrer wird also eine optische Wiedergabe der Fahrspur, die er einhalten soll, zur Verfügung gestellt, wobei diese insbesondere durch Wiedergabe weiterer Umgebungsmerkmale zur Umgebung in Beziehung gesetzt werden kann, so dass ein sicheres Steuern möglich ist. In besonders vorteilhafter Ausgestaltung kann vorgesehen sein, dass der virtuelle Fahrspurverlauf, insbesondere in Form virtueller Fahrspurmarkierungen, auf einem insbesondere kontaktanalogen Head-Up-Display dargestellt wird. Auf diese Weise wird das vom Fahrer durch die Windschutzscheibe gesehene Bild um die auf der Straße ja fehlenden Spurmarkierungen individuell für die aktuell von ihm befahrene Spur ergänzt. Das bedeutet, der Fahrer weiß, ohne den Blick von der Straße abzuwenden, wie er den Abbiegevorgang fortsetzen muss, ohne dass er den Blick dafür von der Straße und dem Verkehrsgeschehen wenden muss. Auf diese Weise wird der Fahrer also mit einer klar und intuitiv verständlichen Zusatzinformation versorgt, die individuell auf ihn zugeschnitten ist und unbeabsichtigte Spurwechsel und Kollisionsrisiken zu vermeiden hilft.

Weitere Assistenz kann dem Fahrer dann gewährt werden, wenn zusätzlich zur Umgebung auch der Zustand des eigenen Kraftfahrzeugs, insbesondere bezüglich der Umgebung, berücksichtigt wird. So kann vorgesehen sein, dass zusätzlich den aktuellen Zustand des Kraftfahrzeugs beschreibende Egodaten ermittelt werden und durch Vergleich mit dem virtuellen Fahrspurverlauf ermittelt wird, ob ein Verlassen der virtuellen Fahrspur droht, wobei bei einem drohenden Verlassen der virtuellen Fahrspur durch das Kraftfahrzeug eine Warnung und/oder ein Fahreingriff erfolgen. In konkreter Ausgestaltung kann beispielsweise vorgesehen sein, dass ein Toleranzbereich zu den virtuellen Fahrspurbegrenzungen vorgegeben wird, wobei immer dann, wenn sich das Kraftfahrzeug in diesen Toleranzbereich hineinbewegt, eine Warnung vor einem drohenden Spurwechsel ausgegeben werden kann. Selbstverständlich sind jedoch auch andere Möglichkeiten denkbar, beispielsweise eine Vorausberechnung des weiteren Bewegungsweges des Kraftfahrzeugs bei den aktuellen fahrdynamischen Fahrparametern, wobei, wenn festgestellt wird, dass das Kraftfahrzeug innerhalb eines bestimmten folgenden Zeitraums die virtuelle Fahrspur verlassen würde, ebenso eine Warnung ausgegeben werden kann. Verschiedene Möglichkeiten sind im Rahmen des erfindungsgemäßen Verfahrens mithin denkbar, um ein drohendes Verlassen der virtuellen Fahrspur zu quantifizieren und auszuwerten. Insbesondere kann auch ein die Wahrscheinlichkeit eines Spurwechsels anzeigender Wert oder dergleichen unter mehreren Kriterien bestimmt werden.

Ausgehend von einem solchen drohenden Verlassen der virtuellen Fahrspur können zusätzlich auch Fremdfahrzeugdaten über weitere Kraftfahrzeuge, insbesondere als Teil der Umgebungsdaten, ermittelt werden und bei der Ausgabe der Warnung und/oder dem Fahreingriff berücksichtigt werden. Beispielsweise kann zusätzlich ein Kollisionsgefahrenwert bestimmt werden, der das Vorhandensein anderer Kraftfahrzeuge oder sonstiger Verkehrsteilnehmer auf den benachbarten Fahrspuren, auf die ein Wechsel droht, berücksichtigt. Dann kann eine Warnung vor einem Fahrspurwechsel verstärkt werden oder, falls nicht grundsätzlich ein Fahreingriff vorgesehen ist, ein Fahreingriff zur Vermeidung einer Kollision erst vorgesehen werden.

Als Warnung kann dabei ein akustisches und/oder optisches und/oder haptisches Warnsignal ausgegeben werden, insbesondere ein vibrierendes Lenkrad. Dabei bietet es sich an, Warnsignale zu verwenden, die dem Fahrer aus einem ähnlichen Kontext bereits bekannt sind. Besitzt das Kraftfahrzeug beispielsweise ein Lane Departure Warning-System, so ist es darin häufig üblich, das drohende Überfahren bzw. das Überfahren einer Fahrspurmarkierung durch ein Vibrieren des Lenkrads zur Kenntnis zu bringen. Entsprechend kann ein derartiger Hinweis auch bei Verwendung des erfindungsgemäßen Verfahrens vorgesehen werden, da dem Fahrer der Sinngehalt des Warnsignals bereits bekannt ist. Dies ist besonders vorteilhaft, wenn ein bereits bestehendes Fahrerassistenzsystem, beispielsweise ein solches Lane Departure Warning-System um die durch das erfindungsgemäße Verfahren beschriebene Funktionalität weitergebildet wird, denn dann sind die entsprechenden Voraussetzungen für das Warnsignal bereits gegeben und müssen nicht mehr erneut realisiert werden. Selbstverständlich sind auch andere Arten von Warnsignalen denkbar, beispielsweise optische Warnsignale, insbesondere auf einem Head-Up-Display, oder akustische Warnsignale, beispielsweise Warntöne.

Ein Fahreingriff kann als ein Lenkeingriff und/oder ein Bremseingriff vorgenommen werden. Dabei können beispielsweise vorhandene, einen insbesondere unterstützenden Fahreingriff liefernde Systeme entsprechend angesteuert werden, beispielsweise ein ESP-System, eine Servolenkung (insbesondere ein EPS-System (electric power steering)), eine Überlagerungslenkung oder dergleichen, allgemein also Fahrdynamikregelsysteme und/oder Lenksysteme. Dabei kann vorgesehen sein, dass Fahreingriffe im erfindungsgemäßen Verfahren nur dann erfolgen, wenn ein tatsächliches Gefährdungspotential gegeben ist, beispielsweise beschrieben durch einen Risikowert, in den neben der Möglichkeit eines drohenden Spurwechsels insbesondere eine Auswertung der Fremdfahrzeugdaten und/oder sonstiger Umgebungsdaten eingehen. Beispielsweise kann bei einer drohenden Kollision, also bei einem hohen Risikowert, sogar eine Notbremsung eingeleitet werden, um die Kollision zu vermeiden.

Als die erwähnten Egodaten können beispielsweise unter anderem der Lenkwinkel und/oder die Querbeschleunigung und/oder die Fahrzeuggeschwindigkeit verwendet werden. Diese Betriebsparameter des Kraftfahrzeugs beschreiben die aktuelle Fahrdynamik und erlauben es, abzuschätzen, ob beispielsweise der erlaubte "Fahrschlauch" verlassen wird oder dergleichen.

Neben dem Verfahren betrifft die vorliegende Erfindung auch ein Kraftfahrzeug mit wenigstens einem Fahrerassistenzsystem, welches zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, welches insbesondere ein Fahrerassistenzsystem mit einem Steuergerät umfasst, welches die Daten verschiedenster weiterer Fahrzeugsysteme, insbesondere eines Navigationssystems, und von Sensoren, insbesondere einer Kamera oder dergleichen, empfangen und auswerten kann, um einen virtuellen Fahrspurverlauf zu ermitteln und entsprechend Ausgabevorrichtungen, insbesondere eine Anzeigevorrichtung wie ein Head-Up-Display, und andere Fahrzeugsysteme ansteuern kann, um Informationen, Warnungen oder Fahreingriffe wie beschrieben zu erzeugen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: einen Ablaufplan des erfindungsgemäßen Verfahrens,
- Fig. 3: eine Verkehrssituation bei einem Abbiegevorgang mit mehreren Abbiegespuren, und
- Fig. 4: eine mögliche Anzeige eines Head-Up-Displays.

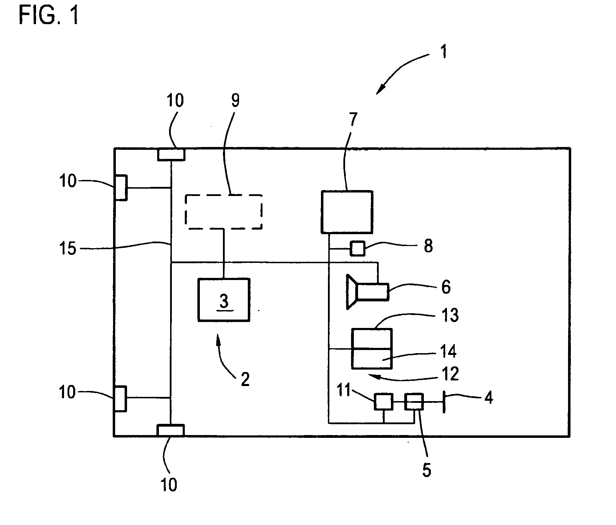

Fig. 1 zeigt eine Prinzipskizze eines erfindungsgemäßen Kraftfahrzeugs 1. Es umfasst ein Fahrerassistenzsystem 2 mit einem Steuergerät 3, das zur Durchführung des gleich beschriebenen erfindungsgemäßen Verfahrens ausgebildet ist. Dabei handelt es sich bei dem Fahrerassistenzsystem 2 im vorliegenden Fall um ein Lane Departure Warning-System, welches auf Autobahnen oder sonstigen mehrspurigen Hochgeschwindigkeitsstraßen mittels einer Bildverarbeitung Fahrspurbegrenzungen der aktuell befahrenen Fahrspur auffindet und diese nutzt, um bei einem drohenden Verlassen der Fahrspur eine Warnung an den Fahrer auszugeben, beispielsweise über ein Vibrieren des Lenkrads 4, wozu eine entsprechende haptische Ausgabeeinrichtung 5 an dem Lenkrad 4 vorgesehen ist. Das Fahrerassistenzsystem nutzt dabei insbesondere die Daten einer auf die Straße vor dem Kraftfahrzeug 1 gerichteten Kamera 6. Es sei jedoch an dieser Stelle bereits angemerkt, dass ein zur Durchführung des erfindungsgemäßen Verfahrens ausgebildetes Fahrerassistenzsystem 2 auch als eigenständiges Fahrerassistenzsystem realisiert werden kann, jedoch bietet sich die Erweiterung eines bereits bestehenden Fahrerassistenzsystems 2 dahingehend an, dass ein Teil der benötigten Funktionalitäten dort bereits realisiert ist, wie im Folgenden noch näher angesprochen werden soll.

Das Kraftfahrzeug 1 umfasst ferner ein Navigationssystem 7, in dem auch Daten über die Mehrspurigkeit von Straßen und dergleichen abgelegt sein können. In bekannter Weise ist dem Navigationssystem 7 ferner ein GPS-Sensor 8 zugeordnet.

Weiterhin sind in dem Kraftfahrzeug 1 weitere Fahrzeugsysteme vorgesehen, die im vorliegenden Fall allgemein bei 9 angedeutet sind. Hierbei kann es sich um verschiedenste weitere Fahrzeugsysteme 9 handeln, beispielsweise ein ESP-System, ein Bremsassistent, ein EPS-System, sonstige Fahrdynamikregelsysteme, verschiedenste Sensorsysteme, insbesondere Sensoren für Fahrdynamikdaten des Kraftfahrzeugs und dergleichen. Das Kraftfahrzeug 1 umfasst zudem noch weitere Sensoren, von denen hier einige beispielhaft dargestellt sind, beispielsweise die Umgebungssensoren 10, die beispielsweise als Radarsensoren ausgebildet sein können und der Lenkwinkelsensor 11. Schließlich ist noch eine Anzeigevorrichtung 12 vorgesehen, die neben einem üblichen Mensch-Maschine-Interface (MMI) 13 auch ein Head-Up-Display 14 umfasst. Alle diese aufgeführten Fahrzeugsysteme sind zur Kommunikation untereinander an einen Fahrzeugbus 15, hier einen CAN-Bus, angeschlossen.

Wie bereits oben erwähnt, ist das Steuergerät 3 des Fahrerassistenzsystems 2 zur Ausführung einer Funktionalität ausgebildet, die einem Fahrer des Kraftfahrzeugs 1 beim Halten der Spur bei einem mehrspurigen Abbiegevorgang assistiert, indem ein virtueller Fahrspurverlauf aufgrund von Umgebungsdaten ermittelt wird und zur Information und/oder Assistenz des Fahrers des Kraftfahrzeugs verwendet wird.

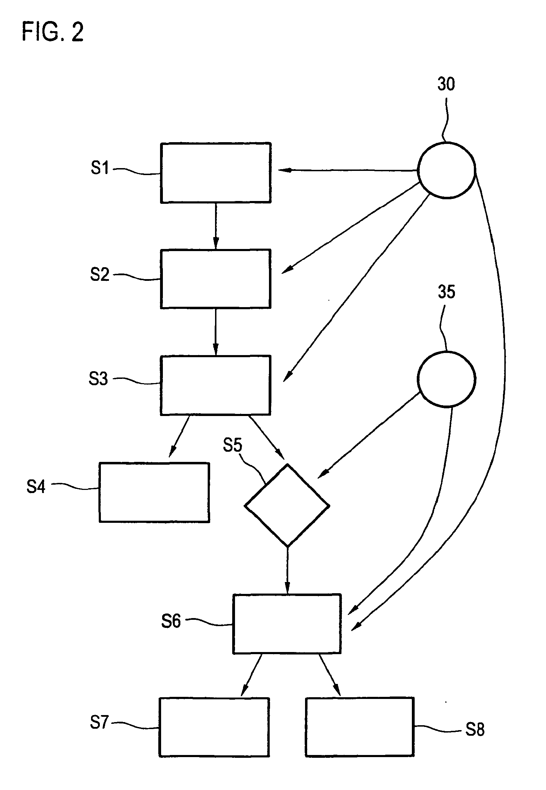

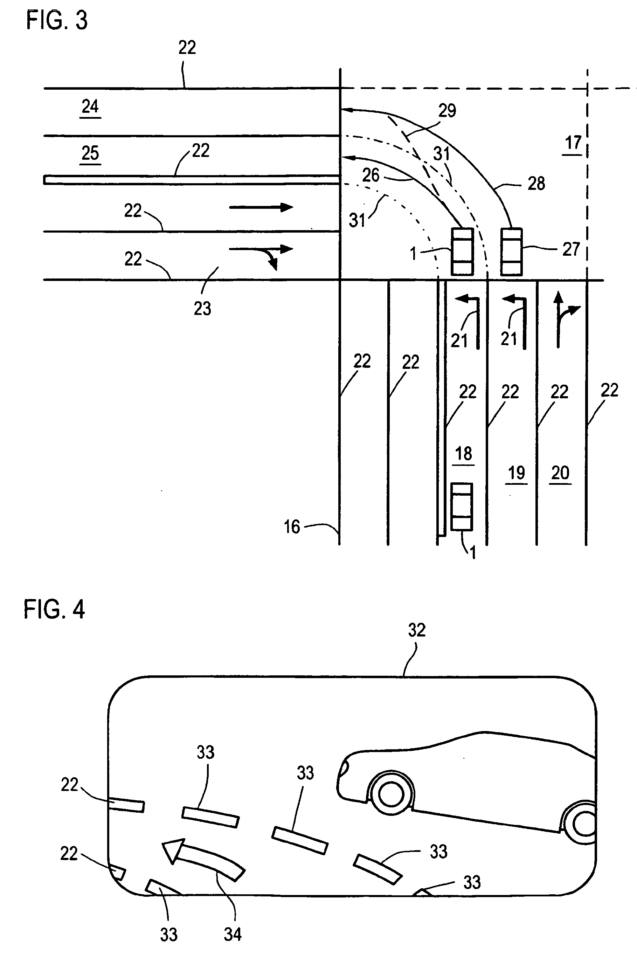

Hierzu zeigt Fig. 2 einen Ablaufplan eines Ausführungsbeispiels des erfindungsgemäßen Verfahrens. Es wird in einem Schritt S1 ständig, gegebenenfalls auf eine bestimmte Fahrumgebung, beispielsweise städtische Bereiche, beschränkt, überprüft, ob ein Abbiegevorgang mit mehreren in dieselbe Abbiegerichtung führenden Spuren bevorsteht. Eine solche Situation ist beispielhaft in Fig. 3 illustriert. Dort bewegt sich das Kraftfahrzeug auf einer fünfspurigen Straße 16 auf eine Kreuzung 17 zu. Ersichtlich sind zwei der in Fahrtrichtung des Kraftfahrzeugs 1 führenden Spuren 18, 19, 20 als Linksabbiegerspuren vorgesehen, nämlich die Spuren 18, 19, wie durch die Pfeile 21 auf der Fahrbahn klargestellt wird. Auf der Straße 16 trennen Fahrbahnmarkierungen 22 die verschiedenen Spuren voneinander, was auch für die weitere Straße 23, welche vier Spuren aufweist, unter anderem die Fahrspuren 24 und 25, jedoch sind im Bereich der Kreuzung 17 ersichtlich keine Fahrspurmarkierungen vorgesehen.

Die Fahrspur 18 ist dabei der Fahrspur 25 zugeordnet, welche die logische Fortsetzung der Fahrspur 18 beim Abbiegen ist, die Fahrspur 19 entsprechend der Fahrspur 24. Üblicherweise wäre also vorgesehen, dass das Kraftfahrzeug 1, wie durch den Pfeil 26 symbolisiert, zur Fahrspur 25 hin abbiegt. Analog sollte ein Fremdfahrzeug 27, das von der Fahrspur 19 kommt, gemäß des Pfeils 28 auf die Fahrspur 24 abbiegen. Da jedoch keine Fahrspurmarkierungen 22 auf der Kreuzung 17 vorgesehen sind, kann es leicht vorkommen, dass der Fahrer das Kraftfahrzeug 1 nicht wie durch den Pfeil 26 markiert vorgesehen lenkt, sondern auf die Verbindungsstrecke zwischen den Spuren 19 und 24 gerät, wie durch die gestrichelte Linie 29 angedeutet. Dann besteht jedoch in ungünstigen Fällen ein Kollisionsrisiko mit dem Fremdfahrzeug 27.

Die durch das Verfahren in Fig. 2 beschriebene Funktionalität des Fahrerassistenzsystems 3 soll nun den Fahrer des Kraftfahrzeugs 1 beim mehrspurigen Abbiegen derart unterstützen, dass er möglichst dem gedachten Fahrspurverlauf gemäß des Pfeils 26 folgt.

Dafür wird zunächst, wie erwähnt, in Schritt S1 überhaupt die Situation festgestellt, dass ein mehrspuriges Abbiegen erfolgen soll. Dies kann auf mehrere Arten geschehen, wobei im vorliegenden Ausführungsbeispiel die Navigationsdaten des Navigationssystems 7 als Umgebungsdaten 30 genutzt werden, da darin enthalten ist, dass zwei Abbiegespuren nach links vorgesehen sind, im Beispiel nach Fig. 3 die Fahrspur 18 und die Fahrspur 19. Werden nun zusätzlich die Daten der Kamera 6 bezüglich der Fahrspurmarkierungen 22 ausgewertet, so kann leicht festgestellt werden, dass sich das Fahrzeug 1 auf der Fahrspur 18 befindet, mithin nach links abbiegen wird. Auch die Daten der Kamera 6 bilden mithin Umgebungsdaten, wobei Funktionen zum Auswerten der Bilder der Kamera 6 bereits im Steuergerät 3 des Fahrerassistenzsystems 2 vorgesehen sind, da, wie eingangs erläutert, das Fahrerassistenzsystem 2 ja auch als Lane Departure Warning-System wirkt.

Ist also festgestellt worden, dass ein mehrspuriges Abbiegen bevorsteht, so wird in einem nächsten Schritt S2 wieder unter Berücksichtigung der Umgebungsdaten 30 eine Identifikation der befahrenen Fahrspur 18 und der logischen Fortsetzung 25 vorgenommen. Auch hierbei können neben den aus den Daten der Kamera 6 ersichtlichen Fahrspurbegrenzungen 22 die Navigationsdaten des Navigationssystems 7 berücksichtigt werden. Es sind nun also die Fahrspur 18 und die Fahrspur 25 mit ihren Fahrspurbegrenzungen 22 bekannt.

Dies wird in einem Schritt S3 genutzt, um einen virtuellen Fahrspurverlauf zu ermitteln, der die befahrene Fahrspur 18 zu 25 im Abbiegebereich, also auf der Kreuzung 17, wo ja keine Fahrspurmarkierungen 22 vorgesehen sind, beschreibt. Hierfür ist im vorliegenden Beispiel vorgesehen, dass die freien Enden der Fahrspurmarkierungen 22, soweit sie bekannt sind, mittels eines entsprechenden Algorithmus unter Berücksichtigung der Umgebungsdaten 30, insbesondere also auch der Ausmessungen der Kreuzung, miteinander verbunden werden. In diesem Ausführungsbeispiel ist dabei vorgesehen, dass eine durch Parameter der zu fahrenden Kurve parametrierbare Standardkurvenform angesetzt und anhand der Umgebungsdaten 30 angepasst wird. Andere Möglichkeiten sind eine übliche Extrapolation fehlender Fahrspurmarkierungen 22 oder die Verwendung einer Standardform mit einer Standardkurvigkeit. Ein Beispiel solcher virtueller Fahrspurbegrenzungen 31 ist in Fig. 3 durch die gestrichpunkteten Linien dargestellt.

Die virtuellen Fahrspurbegrenzungen 31 beschreiben mithin den virtuellen Fahrspurverlauf und bilden sozusagen einen erlaubten "Fahrschlauch" für das Kraftfahrzeug 1 während des Abbiegevorgangs. Die so gewonnene Information über die virtuelle Fahrspur wird im in Fig. 2 gezeigten Ausführungsbeispiel nun auf verschiedene Art und Weise genutzt.

Zum einen erfolgt in einem Schritt S4 in jedem Fall eine Information des Fahrers, im vorliegenden Fall über das Head-Up-Display 14. Eine mögliche derartige Darstellung zeigt in abstrahierter Form die Fig. 4 anhand eines Blicks durch die Windschutzscheibe 32 des Kraftfahrzeugs 1. Ersichtlich sind am linken Rand bereits die Fahrspurmarkierungen 22 der Zielfahrspur 25 zu erkennen. Um den Abbiegevorgang jedoch erfolgreich abschließen zu können, blendet das Fahrerassistenzsystem 2 über das Head-Up-Display 14 nun zusätzlich auch virtuelle Fahrspurmarkierungen 33 sowie einen Hilfspfeil 34 auf die Windschutzscheibe 32 auf. Für den Fahrer wird das für ihn sichtbare Bild also um die auf der Kreuzung 17 eigentlich fehlenden Fahrspurmarkierungen 33 für seine individuelle Fahrspur 18 zu 25 sowie eine Navigationshilfe 34 ergänzt. So fällt es dem Fahrer leicht, seine Fahrspur auch beim mehrspurigen Abbiegen zu halten.

Zusätzlich zur bloßen Information des Fahrers gemäß Schritt S4 wird in einem Schritt S5 jedoch auch überprüft, ob das Kraftfahrzeug 1 die virtuelle Fahrspur zu verlassen droht. Dazu werden auch Egodaten 35 berücksichtigt, hier insbesondere der Lenkwinkel, die Querbeschleunigung und die Fahrzeuggeschwindigkeit. Es wird vorausberechnet, wo das Fahrzeug bei diesen Fahrdynamikparametern hinfahren würde. Tritt es dabei in einen Toleranzbereich um die virtuellen Fahrspurbegrenzungen 31 ein, wird ein drohendes Verlassen erkannt und es wird ein Risikowert initialisiert. Dieser wird dann in einem Schritt S6 unter Berücksichtigung der Umgebungsdaten 30 und der Egodaten 35 weiter ermittelt, insbesondere, indem besondere Gefahrenmomente, hauptsächlich andere Verkehrsteilnehmer wie das Fremdfahrzeug 27, berücksichtigt werden (Fremdfahrzeugdaten als Untermenge der Umgebungsdaten 30). So kann beispielsweise abgeschätzt werden, ob ein Kollisionsrisiko besteht oder dergleichen.

Abhängig von diesem Risikowert wird dann entschieden, wie weiter vorgegangen werden soll. Besteht beispielsweise kein hohes Risiko bei einem unbeabsichtigten Spurwechsel, so wird in einem Schritt S7 lediglich eine Warnung in Form eines Warnsignals ausgegeben, hier durch eine Vibration des Lenkrads 4, wie sie der Fahrer schon von der anderen Funktionalität des Fahrerassistenzsystems auf Hochgeschwindigkeitsstraßen kennt. Selbstverständlich können auch zusätzliche oder alternativ andere Warnsignale erzeugt werden, beispielsweise über andere Komponenten der Anzeigevorrichtung 12 oder auch ein akustisches Ausgabemittel.

Besteht jedoch ein gewisses Risiko, so kann, insbesondere in der Effektivität gestaffelt, zusätzlich in einem Schritt S8 parallel ein Fahreingriff erfolgen, insbesondere ein Lenkeingriff und/oder ein Bremseingriff durch Ansteuerung der weiteren Fahrzeugsysteme 9. Auf diese Weise kann im Extremfall, beispielsweise bei einer sehr hohen Kollisionswahrscheinlichkeit, also wenn ermittelt wurde, dass der zukünftige Fahrweg beispielsweise des Fremdfahrzeugs 27 den zukünftigen Fahrweg des Kraftfahrzeugs 1 mit hoher Wahrscheinlichkeit kreuzt, sogar eine Notbremsung veranlasst werden.

Es sei an dieser Stelle noch darauf hingewiesen, dass zum einen der Schritt S6 als optional zu betrachten ist, also nicht unbedingt durchgeführt werden muss. Es kann auch einfach und mittelbar eine Warnung gemäß Schritt S7 oder gar ein unterstützender Fahreingriff gemäß Schritt S8 erfolgen. Ebenso sei angemerkt, dass auch, wie eben bereits angedeutet, grundsätzlich ein unterstützender Fahreingriff vorgesehen sein kann. Zusammenfassend sind also allgemein beliebige Möglichkeiten denkbar, die Information über den virtuellen Fahrspurverlauf gewinnbringend und sicherheitssteigernd im Kraftfahrzeug 1 zu nutzen.

## Patentansprüche

1. Verfahren zum Betrieb eines Spurhalteassistenzsystems für mehrspuriges Abbiegen in einem Kraftfahrzeug, umfassend folgende Schritte:
- Ermittlung von die mehreren Abbiegespuren beschreibenden Umgebungsdaten,
- unter Berücksichtigung der Umgebungsdaten Ermittlung eines die befahrene Fahrspur im Abbiegebereich beschreibenden, zwei virtuelle Fahrspurbegrenzungen umfassenden, virtuellen Fahrspurverlaufs,
- Verwendung des virtuellen Fahrspurverlaufs zur Information und/oder Assistenz eines Fahrers des Kraftfahrzeugs, wobei der virtuelle Fahrspurverlauf auf einer Anzeigevorrichtung dargestellt wird.

2. Verfahren nach Anspruch 1
**dadurch gekennzeichnet,**
**dass** der virtuelle Fahrspurverlauf, insbesondere in Form virtueller Fahrspurmarkierungen, auf einem insbesondere kontaktanalogen Head-Up-Display dargestellt wird.

3. Verfahren nach einem der vorangehenden Ansprüche,
**dadurch gekennzeichnet,**
**dass** zusätzlich den aktuellen Zustand des Kraftfahrzeugs beschreibende Egodaten ermittelt werden und durch Vergleich mit dem virtuellen Fahrspurverlauf ermittelt wird, ob ein Verlassen der virtuellen Fahrspur droht, wobei bei einem drohenden Verlassen der virtuellen Fahrspur durch das Kraftfahrzeug eine Warnung und/oder ein Fahreingriff erfolgen.

4. Verfahren nach Anspruch 3,
**dadurch gekennzeichnet,**
**dass** auch Fremdfahrzeugdaten über weitere Verkehrsteilnehmer, insbesondere als Teil der Umgebungsdaten, ermittelt werden und bei der Ausgabe der Warnung und/oder dem Fahreingriff berücksichtigt werden.

5. Verfahren nach Anspruch 3 oder 4,
**dadurch gekennzeichnet,**
**dass** als Warnung ein akustisches und/oder optisches und/oder haptisches Warnsignal ausgegeben wird, insbesondere ein Vibrieren des Lenkrads, ausgegeben wird und/oder als Fahreingriff ein Lenkeingriff und/oder ein Bremseingriff vorgenommen wird.

6. Verfahren nach einem der Ansprüche 3 bis 5,
**dadurch gekennzeichnet,**
**dass** als Egodaten der Lenkwinkel und/oder die Querbeschleunigung und/oder die Fahrzeuggeschwindigkeit verwendet werden.

7. Verfahren nach einem der vorangehenden Ansprüche,
**dadurch gekennzeichnet,**
**dass** als Umgebungsdaten Messdaten wenigstens eines Umgebungssensors und/oder einer Kamera, insbesondere einer Kamera eines auf eine Fahrspur bezogenen weiteren Fahrerassistenzsystems, und/oder Daten eines Navigationssystems berücksichtigt werden.

8. Kraftfahrzeug (1) mit wenigstens einem Fahrerassistenzsystem (2), ausgebildet zur Durchführung des Verfahrens nach einem der vorangehenden Ansprüche.

## Claims

1. Method for operating a lane departure warning system for multiple-lane turning in a motor vehicle, comprising the following steps:
- determining environmental data which describes a plurality of turning lanes,
- determining a virtual course of the lane which describes the lane which is being travelled in and comprises two virtual lane boundaries by taking into account the environmental data,
- using the virtual course of the lane for information and/or assistance for a driver of the motor vehicle, the virtual course of the lane being displayed on a display device.

2. Method according to claim 1, **characterised in that** the virtual course of the lane, in particular in the form of virtual lane markings, is displayed on an, in particular contact analogue, head-up display.

3. Method according to any of the preceding claims, **characterised in that** ego data is additionally determined which describes the current state of the motor vehicle and, by comparison with the virtual course of the lane, it is determined whether there is a risk of leaving the virtual lane, a warning and/or a driving intervention being carried out if there is a risk of leaving the virtual lane.

4. Method according to claim 3, **characterised in that** data on other vehicles relating to other road users, in particular as part of the environmental data, is also determined and is taken into account when outputting the warning and/or the driving intervention.

5. Method according to either claim 3 or claim 4, **characterised in that** an acoustic and/or optical and/or haptic warning signal, in particular vibration of the steering wheel, is output as a warning and/or a steering intervention and/or a braking intervention is carried out as a driving intervention.

6. Method according to any of claims 3 to 5, **characterised in that** the steering angle and/or the lateral acceleration and/or the vehicle speed are used as ego data.

7. Method according to any of the preceding claims, **characterised in that** measurement data from at least one environmental sensor and/or a camera, in particular a camera of an additional driver assistance system relating to a lane, and/or data from a navigation system are taken into account as environmental data.

8. Motor vehicle (1) comprising at least one driver assistance system (2), which is configured to perform the method according to any of the preceding claims.

## Revendications

1. Procédé de fonctionnement d'un système d'assistance au maintien sur voie lors du passage d'une intersection à multiples voies dans un véhicule automobile, comprenant les étapes consistant à :
- déterminer des données ambiantes décrivant les multiples voies d'intersection,
- en tenant compte des données ambiantes, déterminer un tracé de voie virtuel décrivant la voie parcourue dans la zone d'intersection et comprenant deux limitations de voie virtuelles, et
- utiliser le tracé de voie virtuel pour information et/ou assistance à un conducteur du véhicule automobile, dans lequel le tracé de voie virtuel est représenté sur un dispositif d'affichage.

2. Procédé selon la revendication 1,
**caractérisé en ce que**
le tracé de voie virtuel, en particulier sous la forme de marquages de voies virtuels, est présenté sur un affichage du type à visiocasque en particulier à contact analogique.

3. Procédé selon l'une quelconque des revendications précédentes,
**caractérisé en ce que**
l'on détermine en outre les données eGo décrivant l'état courant du véhicule automobile et l'on détermine par comparaison avec le tracé de voie virtuel si l'on menace de quitter la voie virtuelle, un avertissement et/ou un engagement de conduite intervenant lorsque le véhicule automobile menace de quitter la voie virtuelle.

4. Procédé selon la revendication 3,
**caractérisé en ce que**
l'on détermine également des données de véhicules étrangers sur d'autres participants au trafic, en particulier en tant que partie des données ambiantes et l'on en tient compte lors de la délivrance de l'avertissement et/ou de l'engagement de conduite.

5. Procédé selon la revendication 3 ou la revendication 4,
**caractérisé en ce que**
l'on délivre comme avertissement un signal d'avertissement acoustique et/ou optique et/ou haptique, en particulier une vibration du volant de direction, et/ou on effectue comme engagement de conduite un engagement directionnel et/ou un engagement de freinage.

6. Procédé selon l'une quelconque des revendications 3 à 5,
**caractérisé en ce que**
l'on utilise comme données eGo l'angle de direction et/ou l'accélération transversale et/ou la vitesse du véhicule.

7. Procédé selon l'une quelconque des revendications précédentes,
**caractérisé en ce que**
l'on tient compte comme données ambiantes des données de mesure d'au moins un capteur d'ambiance et/ou un appareil photo, en particulier un appareil photo d'un autre système d'assistance se rapportant aux voies de circulation, et/ou de données d'un système de navigation.

8. Véhicule automobile (1) comprenant un système d'assistance au conducteur (2) conformé pour réaliser le procédé selon l'une quelconque des revendications précédentes.
